# EUROPÄISCHE PATENTSCHRIFT

(11) **EP 3 135 869 B1**
(45) Veröffentlichungstag und Bekanntmachung des Hinweises auf die Patenterteilung: **15.05.2024**
(21) Anmeldenummer: 16183862.8
(22) Anmeldetag: 11.08.2016
(51) Int. Cl.: F01D 11/12

(54) **DICHTELEMENT FÜR EINE TURBOMASCHINE, TURBOMASCHINE UND VERFAHREN ZUR HERSTELLUNG EINES DICHTELEMENTS FÜR EINE TURBOMASCHINE**
SEALING ELEMENT FOR A TURBOMACHINE, TURBOMACHINE AND METHOD FOR MANUFACTURING A SEALING ELEMENT FOR A TURBOMACHINE
ÉLÉMENT D'ÉTANCHÉITÉ POUR UNE TURBOMACHINE, TURBOMACHINE ET PROCÉDÉ DE FABRICATION D'UN ÉLÉMENT D'ÉTANCHÉITÉ POUR UNE TURBOMACHINE

(30) Priorität: 25.08.2015 DE 102015216208
(43) Veröffentlichungstag der Anmeldung: 01.03.2017
(73) Patentinhaber: Rolls-Royce Deutschland Ltd & Co KG, 15827 Blankenfelde-Mahlow (DE)
(72) Erfinder: GÄBLER, Miklos, 15827 Blankenfelde-Mahlow (DE); PANNIER, Stephan, 15827 Blankenfelde-Mahlow (DE); SCHNEIDER, Mandy Eileen, 15827 Blankenfelde-Mahlow (DE)
(74) Vertreter: Maikowski & Ninnemann Patentanwälte Partnerschaft mbB

(56) Entgegenhaltungen:
- EP-A2- 0 081 010
- DE-B1- 1 576 956
- DE-B4-102004 057 360
- GB-A- 2 001 692
- US-A- 3 649 033
- US-A1- 2009 148 278

## Beschreibung

Die Erfindung betrifft ein Dichtelement mit den Merkmalen des Anspruchs 1 und eine Turbomaschine mit den Merkmalen des Anspruchs 13 und ein Verfahren zur Herstellung eines Dichtelementes mit den Merkmalen des Anspruchs 14.

In Turbomaschinen, wie z.B. Flugzeugtriebwerken, ist es notwendig, Dichtungen zwischen dem Gehäuse von rotierenden Bauteilen, wie z.B. Rotoren oder rotierenden Dichtlippen (Webseal) vorzusehen. Abrasive Einlaufdichtungen für Flugzeugtriebwerke sind z.B. aus der US 3 844 011 A oder der DE 10 2004 057 360 B4 bekannt. Dabei kommen z.B. Honigwabenstrukturen zum Einsatz. Dichtungen mit Honigwabenstrukturen sind in der EP 0 081 010 A2, der US 3 649 033 A und GB 2 001 692 A beschrieben. Auch die US 2009/0148278 betrifft eine Honigwabenstruktur.

Die DE 1 576 956 B1 beschreibt eine Labyrinthdichtung für Turbomaschinen.

Es besteht dabei die Aufgabe, Dichtelemente zu schaffen, die in gezielter und effizienter Weise eine abrasive Dichtung bereitstellen.

Die Aufgabe wird durch ein Dichtelement mit den Merkmalen des Anspruchs 1 gelöst.

Dabei weist das Dichtelement eine Wabenstruktur zur Anordnung im Gehäuse der Turbomaschine auf. Die Wabenstruktur erstreckt sich dabei in einer ersten Richtung, wobei Stützstrukturen mit der Wabenstruktur erfindungsgemäß einstückig und / oder in wiederkehrenden Mustern verbunden sind und sich zumindest teilweise in die Wabenstruktur erstrecken. Ein wiederkehrendes Muster ist dabei eine Abfolge von regelmäßig geformten Stützstrukturen, die in einem regelmäßigen Muster (z.B. einem Raster) mit der Wabenstruktur verbunden sind.

Die Stützstrukturen erstrecken sich mindestens teilweise oder vollständig in einer zweiten Richtung, die von der ersten Richtung abweicht. Somit weist das Dichtelement zwei Strukturen auf: die Wabenstruktur und damit verbunden die Stützstrukturen. Die Stützstrukturen sind dabei mindestens teilweise in eine andere Richtung orientiert als die Wabenstruktur. Dies gibt dem Dichtelement eine Struktur, die in definierter Weise stabil ist und auf den abrasiven Verformungsfall einstellbar ist.

Die Stützstrukturen weisen flächige Anteile auf, die mindestens eine teilweise oder ganz geschlossene Zelle, insbesondere fluiddichte Zelle, mit der Wabenstruktur ausbilden. Die flächigen Anteile können z.B. in Form von Zwischenwänden vorliegen, die in den einzelnen Waben der Wabenstruktur angeordnet sind. Die Zwischenwände der Stützstrukturen können die geschlossene Zelle ausbilden, wobei die mindestens eine geschlossene Zelle insbesondere mindestens teilweise mit einem Löschmittel und / oder Luft befüllt ist. Durch die mindestens eine geschlossene Zelle kann z.B. der ungewollte Lotfluß (Kapillareffekt) vermieden werden. Auch dient mindestens eine mit Gas (z.B. mit Luft) gefüllte Zelle der thermischen Isolation.

Die Waben der Wabenstruktur weisen einen rautenförmigen Querschnitt auf, wobei der spitze Winkel des Querschnitts senkrecht zu der Drehebene des rotierenden Bauteils (z.B. Rotor, Webseal) liegt und der spitze Winkel weniger als 90° aufweist. In einer Ausgestaltung des Dichtelements kann der spitze Winkel weniger als 60°, insbesondere zwischen 60° und 30°, aufweisen. Die kurze Achse des rautenförmigen Querschnitts liegt damit in oder parallel zu der Drehebene des Rotors. Die Winkelausrichtung innerhalb einer Wabenstruktur wird bei einer rotierenden Dichtlippe (Webseal) vom kleinsten möglichen Leckagenquerschnitt zwischen Dichtungslippe und der Wabenstruktur vorgegeben.

In einer Ausführungsform sind die Wabenstruktur und / oder die Stützstrukturen bei einem Kontakt mit dem mindestens einen rotierenden Bauteil (z.B. einer rotierenden Dichtlippe) abrasiv veränderbar. Damit ist eine Reduktion der Reibflächen erreichbar.

In einer Ausführungsform erstreckt sich die erste Richtung, in der sich die Wabenstruktur erstreckt, im Wesentlichen senkrecht zum Gehäuse der Turbomaschine. Die Waben der Wabenstruktur sind somit radial ausgerichtet. In einer weiteren Ausführungsform liegt die zweite Richtung, in der die Stützstrukturen angeordnet sind, hauptsächlich senkrecht zur ersten Richtung der Wabenstruktur.

Die Dichtwirkung des Dichtelementes wird verbessert, indem die Stützstrukturen in der ersten Richtung jeweils versetzt an den Waben der der Wabenstruktur angeordnet sind. Damit können z.B. eine oder mehrere geschlossene Zellen in unterschiedlichen Höhen in den Waben ausgebildet werden.

In einer Ausführungsform weisen die Wabenstruktur und / oder die Stützstrukturen eine Dicke, insbesondere eine Wanddicke von weniger als 100 µm, insbesondere weniger als 80 µm auf.

Für eine hinreichende Temperaturfestigkeit bestehen die Wabenstruktur und / oder die Stützstrukturen aus einem metallischen Material, insbesondere aus der FeCrAlxx Gruppe oder Ni-Basis Legierungs- Gruppe, wobei Wabenstruktur und Stützstrukturen insbesondere aus demselben Material aufgebaut sind. Wenn Wabenstruktur und Stützstrukturen aus dem gleichen Material einstückig aufgebaut sind, lässt sich das Dichtelement besonders effizient herstellen. Mögliche Materialien sind z.B. Inco718 oder Fe20Cr6AlY mit einem D90 < 10µm. Mit solchen Materialien kann ein gezielt abrasives Verhalten der Wabenstruktur (z.B. eine gezielte Sprödigkeit) und / oder der Stützstrukturen erreicht werden.

Für eine flexible Anpassung an die jeweilige Dichtungsaufgabe weisen in einer Ausführungsform die Wabenstruktur und / oder Stützstrukturen im Dichtelement eine variable Dichte, Struktur und / oder Form auf. So können z.B. die Querschnittsgrößen der Waben an die Aufgabe angepasst werden. So könnten z.B. die Waben in der Mitte des Dichtelementes größer ausgebildet sein als am Rand. Grundsätzlich ist damit eine Anpassung an die jeweilige Anwendung möglich. Auch kann das Dichtelement optimiert werden, wobei z.B. für eine reduzierte Wärmeentwicklung beim Anlaufen eher größere Waben verwendet werden. Für die Verbesserung der Dichtwirkung werden kleine Spaltmaße und kleinere Zellen benötigt.

Zur Vermeidung von Beschädigungen der Rotorschaufeln ist in einer Ausführungsform die Wabenstruktur auf Grund der Stützstrukturen ein Mittel zur Rückhaltung von Lot aufweist. Lot wird häufig bei der Montage von Dichtelementen verwendet, wobei eine unkontrollierte Diffusion von Lot an die Oberfläche des Dichtelements unerwünscht ist. Mit einer Ausführungsform kann ein Hochsteigen von Lot an die Oberfläche der Wabenstruktur verhindert werden. Es kann so nicht zu unerwünschten Verdickung der Wabenstruktur kommen. Deshalb wird mit der vorliegenden Erfindung z.B. eine kleine separate Wabenkammer mit Hilfe der Stützstrukturen ausgebildet, so dass das Lot innerhalb der untersten Wabenkammer bleiben wird.

In einer Ausführungsform ist die Wabenstruktur mit einem fluidischen Ventilmittel zur Verbesserung der Dichtungseigenschaften gekoppelt. Ein fluidisches Ventilmittel, wie z.B. ein Teslaventil ist ein passives fluidisches Bauelement, bei dem der Strömungswiderstand in einer Richtung sehr viel höher ist als in der entgegengesetzten Richtung. Damit lässt sich eine Art Gleichrichterwirkung erzielen.

Die Aufgabe wird auch durch ein Dichtelement mit den Merkmalen des Anspruchs 11 gelöst, wobei die Wabenstruktur und / oder die Stützstrukturen durch einen metallischen 3D-Siebdruck oder einen metallischen 3D-Druckvorgang herstellbar sind. Dabei kann bei der Herstellung ein metallisches Pulver verwendet werden, insbesondere mit einer Korngröße D90 (d.h. 90% der Partikel liegen darunter) von weniger als 10 µm.

Beim 3D-Siebdruck wird z.B. das Dichtelement mit der Wabenstruktur und / oder Strukturen in Ebenen zerlegt, wobei für jede Ebene ein Siebwerkzeug verwendet wird. Die erste Ebene wird auf eine Unterlage gedruckt, anschließend gehärtet und wieder positionsgenau auf den vorangehenden Druck gedruckt, bis die erste Strukturebene ihre Sollhöhe erreicht hat. Anschließend wird die nächste Strukturebene darauf gedruckt, wobei diese Schritte wiederholt werden.

Die Aufgabe wird auch durch eine Turbomaschine, insbesondere eine Flugzeugtriebwerk, mit einem Dichtelement nach mindestens einem der Ansprüche 1 bis 10 oder den Ansprüchen 11 oder 12 gelöst.

Die Aufgabe wird auch durch ein Verfahren zur Herstellung eines Dichtelements mit den Merkmalen des Anspruchs 14 gelöst.

Dabei wird eine Wabenstruktur zur Anordnung im Gehäuse der Turbomaschine und Stützstrukturen mindestens teilweise durch metallischen 3D-Siebdruck oder einen metallischen 3D-Druckvorgang hergestellt, wobei sich die Wabenstruktur in einer ersten Richtung erstreckt und die Stützstrukturen mit der Wabenstruktur zumindest teilweise einstückig und / oder in wiederkehrenden Mustern verbunden sind, sich die Stützstrukturen zumindest teilweise in die Wabenstruktur erstecken und die Stützstrukturen sich mindestens teilweise oder vollständig in einer zweiten Richtung erstrecken, die von der ersten Richtung abweicht, wobei die Stützstrukturen flächige Anteile aufweisen, die mindestens eine teilweise oder ganz geschlossene Zelle mit der Wabenstruktur ausbilden; wobei die Waben der Wabenstruktur einen rautenförmigen Querschnitt aufweisen, wobei der spitze Winkel senkrecht zur Drehebene des Rotors liegt und der spitze Winkel weniger als 60° aufweist.

In Zusammenhang mit den in den Figuren dargestellten Ausführungsbeispielen wird die Erfindung erläutert. Dabei zeigt:
Fig. 1 eine schematische Darstellung eines Gehäuses und eines Rotors einer Turbomaschine mit einem Dichtelement;
Fig. 2 eine schematische Schnittansicht durch ein rotierende Dichtlippe (Webseal);
Fig. 3, die nicht Teil der vorliegenden Erfindung ist, eine dreidimensionale Ansicht eines Beispiels eines Dichtelements mit einer Wabenstruktur mit quadratischem Querschnitt und horizontalen Stützstrukturen;
Fig. 4, die nicht Teil der vorliegenden Erfindung ist, eine dreidimensionale Ansicht eines Beispiels eines Dichtelements mit einer Wabenstruktur mit quadratischem Querschnitt in schräger Anordnung und horizontalen Stützstrukturen;
Fig. 5, die nicht Teil der vorliegenden Erfindung ist, eine dreidimensionale Ansicht eines Beispiels eines Dichtelements mit einer Wabenstruktur mit hexagonalem Querschnitt und horizontalen Stützstrukturen;
Fig. 6 eine dreidimensionale Ansicht einer erfindungsgemäßen Ausführungsform eines Dichtelements mit einer Wabenstruktur mit rautenförmigem Querschnitt und horizontalen Stützstrukturen;
Fig. 7, die nicht Teil der vorliegenden Erfindung ist, eine dreidimensionale Ansicht eines Beispiels eines Dichtelements mit einer Wabenstruktur mit hexagonalem Querschnitt und geneigten Stützstrukturen.
Fig. 8 eine Detailansicht einer erfindungsgemäßen Wabenstruktur mit rautenförmigem Querschnitt.

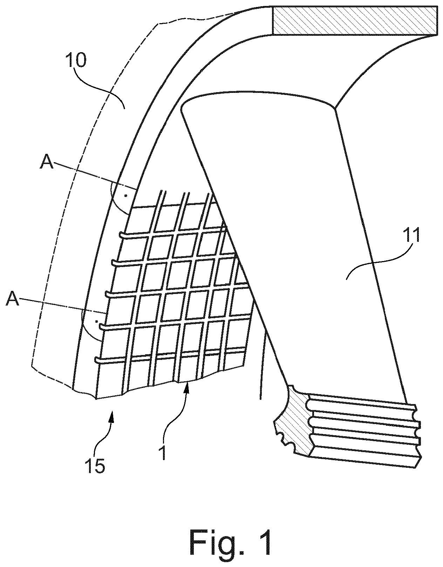

In der Fig. 1 ist schematisch ein Ausschnitt aus einer Turbomaschine, nämlich einem Flugzeugtriebwerk dargestellt. Dabei umgibt ein Gehäuse 10 ein rotierendes Bauteil, hier einen Rotor, von dem hier nur eine Rotorschaufel 11 dargestellt ist. Solche Rotorschaufeln 11 sind z.B. in Verdichtern und / oder Turbinen eines Flugzeugtriebwerkes angeordnet.

An der Innenseite des Gehäuses 10 ist in an sich bekannter Weise eine Wabenstruktur 1 eines Dichtelements 15 angeordnet. Die Waben der Wabenstruktur 1 weisen hier einen quadratischen Querschnitt auf. Die einzelnen Waben der Wabenstruktur 1 weisen Wände auf, die im Wesentlichen senkrecht zum Gehäuse 10 stehen. Diese senkrechte Richtung A ist in Fig. 1 an zwei Stellen eingezeichnet. Im Folgenden werden Ausführungsformen von Dichtelementen 15 beschrieben, die zusätzlich zu der Wabenstruktur 1 noch Stützstrukturen 2 aufweisen, die in der Fig. 1 aus Gründen der Übersicht nicht dargestellt sind.

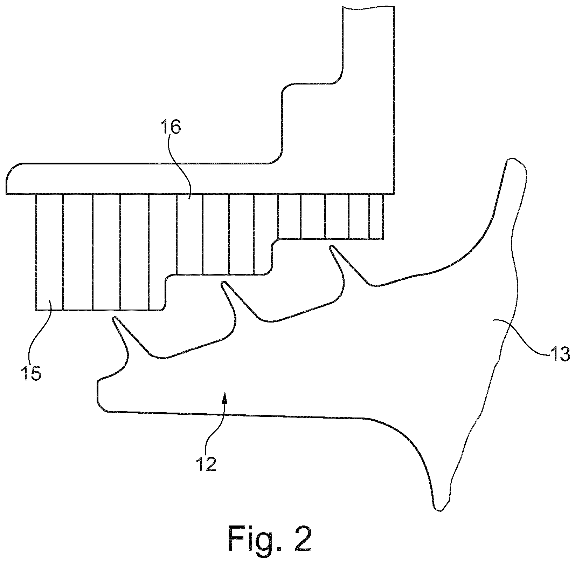

Fig. 2 ist in einem Ausschnitt ein anderes rotierendes Bauteil darstellt, nämlich eine rotierende Dichtlippe 12 mit drei einzelnen umlaufenden Dichtlippen, wie sie z.B. an einem Rotor 13 einer Turbinenstufe angeordnet ist. Die Dichtlippe 12 greift in das umlaufende Dichtelement 15 an einem Stator 16 ein. Die Wabenstruktur 1 und die Stützstrukturen 2 sind aus Gründen der Übersichtlichkeit hier nicht dargestellt.

Beim An- oder Einlaufen von rotierenden Bauteilen, wie Rotorschaufeln 11 (Fig. 1) oder der Dichtlippe 12 (Fig. 2) in das Dichtelement 15 werden die in Fig. 1 und 2 nicht dargestellte Wabenstruktur 1 und auch die Stützstrukturen 2 insbesondere, abrasiv abgetragen. Durch die gestufte Design/Konstruktion des Dichtelements 15 sowie durch die Anordnung von mehreren Dichtlippen wird eine Labyrinthdichtung für den Spalt zwischen den Rotorschaufeln 11 oder der Dichtlippe 12 und dem Gehäuse 10 konstruiert.

Grundsätzlich kann ein Dichtelement 15 auch mit anderen rotierenden Bauteilen einer Turbomaschine verwendet werden.

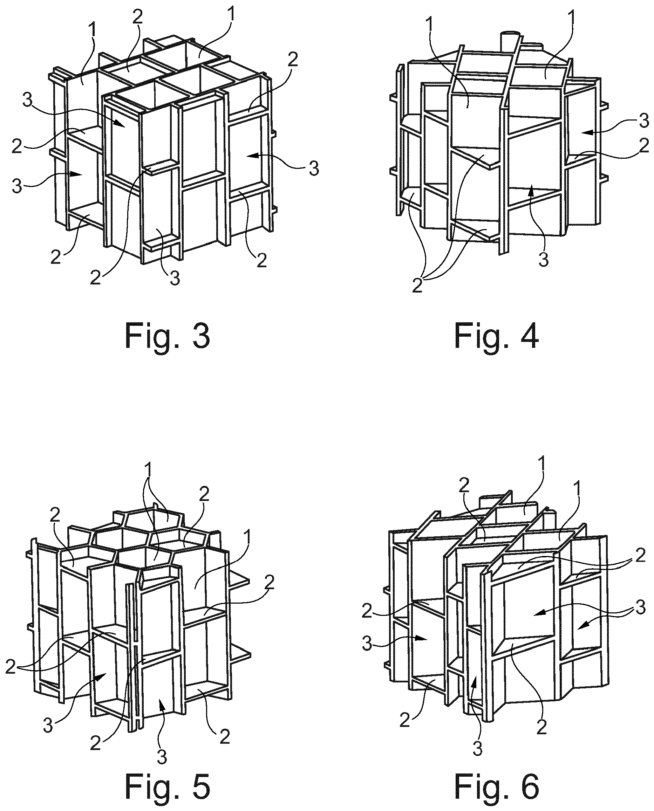

In Fig. 3, die nicht Teil der vorliegenden Erfindung ist, ist ein dreidimensionaler Ausschnitt aus einem Dichtelement 15 dargestellt. Dabei weisen die Waben der Wabenstruktur 1 jeweils einen quadratischen Querschnitt auf. Die Wände der Wabenstruktur 1 sind in der ersten Richtung A orientiert, die im Fall der Fig. 1 im Wesentlichen senkrecht zur Wandung des Gehäuses 10 orientiert sind. Damit zeigen sie in radialer Richtung, d.h. die Richtung,

in die sich auch die Rotorschaufeln 11 erstrecken (siehe Fig. 1). Da die Wandung des Gehäuses 10 gekrümmt ist, ändert sich die Richtung der Wabenwände.

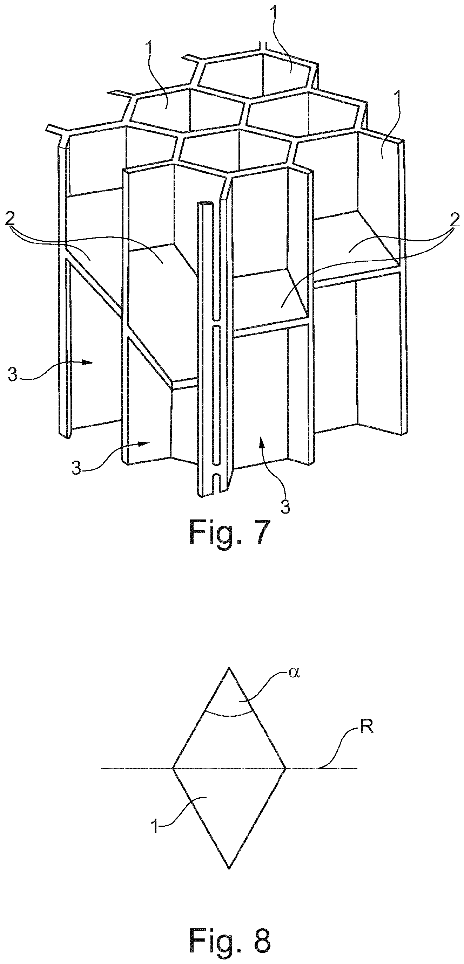

Im Vordergrund und an der linken Seite des Ausschnitts in Fig. 3, die nicht Teil der vorliegenden Erfindung ist, sind die Waben der Wabenstruktur 1 jeweils aufgeschnitten, so dass man die Stützstrukturen 2 erkennen kann. Die Stützstrukturen 2 sind hier als ebene Flächen ausgebildet, die im Wesentlichen senkrecht zu den Wänden der Wabenstrukturen 1 ausgebildet sind. Damit sind die Stützstrukturen 2 in einer zweiten Richtung B orientiert, die von der ersten Richtung A abweicht. In dem dargestellten Beispiel stehen die beiden Richtungen A, B senkrecht aufeinander. In Fig. 7, die nicht Teil der vorliegenden Erfindung ist, wird ein Beispiel dargestellt, bei der die Richtungen A, B nicht senkrecht orientiert sind. Die Stützstrukturen 2 sind hier erfindungsgemäß als flächige Gebilde ausgebildet, die in den einzelnen Waben der Wabenstruktur 1 geschlossene Zellen 3 ausbilden. Grundsätzlich reicht auch eine teilweise oder ganz geschlossene Zelle 3 aus.

Wie z.B. an der aufgeschnittenen Vorderseite der Fig. 2 erkennbar ist, sind Stützstrukturen 2 in den Waben der Wabenstruktur 1 jeweils in unterschiedlicher Höhe (z.B. gemessen in der ersten Richtung A) angeordnet; d.h. die Stützstrukturen 2 sind versetzt angeordnet, so das geschlossene Zellen 3 entlang der einzelnen Waben entstehen, die unterschiedliche Höhenlagen aufweisen. Die geschlossenen Zellen 3 können mit einem Fluid, z.B. einem Gas oder einem Löschmittel/Pulver gefüllt sein.

In Fig. 3, die nicht Teil der vorliegenden Erfindung ist, ist erkennbar, dass die Stützstrukturen 2 ein regelmäßiges Muster, nämlich ein Raster aus gleichen Zellen bilden. Diese können z.B. einstückig mit der Wabenstruktur 1 hergestellt werden.

Wenn eine Rotorschaufel 11 (siehe Fig. 1) oder eine Dichtlippe 12 (siehe Fig. 2) beim Anlaufen in die Wabenstruktur 1 eindringt werden einige Wände der Waben und damit auch die geschlossenen Zellen 3 bis zu einer bestimmten Tiefe abrasiv verformt. Wenn das Material hinreichend spröde gewählt ist, zerfallen die Wände der Wabenstruktur 1 und die Stützstruktur 2 relativ leicht, so dass der abrasive Effekt leicht eintreten kann.

Im Dichtelement 15 tiefer liegende (d.h. von der Drehachse gesehen radial weiter außen liegende) geschlossene Zellen 3 bleiben intakt, so dass eine gute Dichtwirkung weiterhin gewährleistet wird. Durch die unterschiedlich versetzt angeordneten Stützstrukturen 2 - und damit die unterschiedlich versetzt angeordneten geschlossenen Zellen 3 - wird die Dichtwirkung verbessert.

Die dreidimensional komplexe Struktur des Dichtelements 15 wird durch einen 3D-Siebdruck oder ein 3D-Druckverfahren aus metallischem Pulver hergestellt. Das Pulver weist dabei z.B. eine D90 Korngröße von weniger als 10 µm (d.h. feiner Staub) auf, welcher durch Gas- oder Wasserverdüsung hergestellt wird.

Mit diesen Verfahren lassen sich komplexe, dreidimensionale Strukturen effizient herstellen. Dabei ist es auch möglich, dass die Größe, Ausrichtung und / oder 3D Form der Wabenstruktur 1 und / oder der Stützstrukturen 2 innerhalb des Dichtelements 15 variiert. Wie im Folgenden noch dargestellt wird, kann die Ausrichtung der Wände der Waben und / oder die Ausrichtung der Stützstrukturen 2 dazu beitragen die Reibkontaktfläche zu minimieren.

Die Wanddicken der Wabenstruktur 1 und der Stützstrukturen 2 betragen dabei z.B. weniger als 100 µm. Wenn z.B. ein Metall aus der FeCrAlY-Gruppe für die Wabenstruktur 1 und die Stützstrukturen 2 verwendet wird, so entsteht ein Dichtelement 15, das hinreichend abrasiv verformbar ist, gleichzeitig aber hochtemperaturbeständig ist.

In den Fig. 4 bis 6 werden Abwandlungen des Beispiels gemäß Fig. 3, die nicht Teil der vorliegenden Erfindung ist, dargestellt, so dass auf die obige Beschreibung Bezug genommen werden kann. Auch hier bilden die Stützstrukturen 2 regelmäßige Muster aus, d.h. sie sind musterartig mit der Wabenstruktur 1 verbunden.

Der Aufbau der Wabenstruktur 1 und die Anordnung der Stützstrukturen 2 als flächige Gebilde zum Aufbau von geschlossenen Zellen 3 in der Wabenstruktur 1 ist die gleiche. Auch sind die flächigen Stützstrukturen 2 auch hier senkrecht zu den Wänden der Wabenstruktur 1 angeordnet, d.h. die erste Richtung A steht im Wesentlichen senkrecht zur zweiten Richtung B.

In Fig. 4, die nicht Teil der vorliegenden Erfindung ist, ist die Wabenstruktur 1 ebenfalls aus Waben mit einem quadratischen Querschnitt gebildet. Allerdings ist die Ausrichtung der Waben um 45° gedreht.

In Fig. 5, die nicht Teil der vorliegenden Erfindung ist, weisen die Waben der Wabenstruktur 1 einen hexagonalen Querschnitt auf, wie bei einer an sich bekannten Honigwabenstruktur.

In Fig. 6 ist eine erfindungsgemäße Ausführungsform dargestellt, bei dem die Waben der Wabenstruktur 1 einen rautenförmigen Querschnitt aufweisen. Dies kann - wie in Zusammenhang mit erfindungsgemäßer Fig. 8 dargestellt wird - einen Vorteil haben, wenn das Dichtelement 15 - und damit die Form der Waben - auf die Drehebene (R) ausgerichtet wird.

Fig. 8 zeigt eine schematische Draufsicht auf eine erfindungsgemäße rautenförmige Wabe einer Wabenstruktur 1, wie sie z.B. in erfindungsgemäßer Fig. 6 dargestellt ist. Der spitze Winkel α ist dabei senkrecht auf die Drehebene (R) des Rotors 13 oder der Dichtlippe 12 ausgerichtet, die sich senkrecht zur Zeichenebene erstreckt und durch die gestrichelte Linie R dargestellt wird. Durch den Winkel α kann in der Auslegung die Wichtung zwischen Dichtwirkung und minimaler Reibfläche gesteuert werden.

Während in den Fig. 3 bis 6 die flächigen Stützstrukturen 2 im Wesentlichen jeweils senkrecht zu den Wandungen der Waben ausgebildet sind, ist in Fig. 7, die nicht Teil der vorliegenden Erfindung ist, ein Beispiel dargestellt, bei dem die flächigen Stützstrukturen 2 gegenüber der Horizontalen geneigt ausgebildet sind, d.h. die Richtungen A, B stehen nicht mehr senkrecht zueinander.

Eine mögliche Abwandlung aller dargestellten Ausführungsformen ist, dass die Stützstrukturen 2 die Waben der Wabenstruktur 1 nicht vollständig verschließen. Damit würden sie das mechanische Verhalten beeinflussen, aber es würden keine geschlossenen Zellen 3 entstehen. Auch ist es möglich, dass sich nur in Teilen des Dichtelementes 15 geschlossene Zellen ausbilden; die flexiblen Herstellungsverfahren erlauben hier eine große 3D Strukturvielfalt. So müssen die Stützstrukturen 2 auch nicht flächig ausgebildet sein, sondern sie können auch z.B. netzartig oder erfindungsgemäß stabförmig sein.

Des Weiteren ist es möglich, dass Ausführungsformen des Dichtelements 15 eine Wabenstruktur 1 mit unterschiedlichen Wabenformen und / oder Abmessungen aufweisen. So kann z.B. ein zentraler Bereich des Dichtelementes 15 mit einer anderen Wanddichte (z.B. einer anderen Wabengröße, einer anderen Wabenform, einer anderen Stützstruktur) ausgestattet sein als ein am Rand liegender Bereich des Dichtelements. Die flexiblen Herstellungsverfahren ermöglichen hier eine Anpassung an die zu erzielende Dichtwirkung.

Die Waben der Wabenstruktur 1 können in Beispielen, die nicht Teil der vorliegenden Erfindung sind, auch einen kreisförmigen, polygonalen, dreieckigen oder allgemein polygonalen Querschnitt aufweisen.

### Bezugszeichenliste

- 1: Wabenstruktur
- 2: Stützstrukturen
- 3: geschlossene Zellen

- 10: Gehäuse
- 11: Rotorschaufel
- 12: Dichtlippe
- 13: Rotor
- 15: Dichtelement
- 16: Stator

- A: erste Richtung der Wabenstruktur (senkrecht zu einem Rotorgehäuse)
- B: zweite Richtung
- R: Drehebene des Rotors

- α: Winkel einer rautenförmigen Wabe

## Patentansprüche

1. Dichtelement für eine Turbomaschine, insbesondere ein Flugzeugtriebwerk, welche ein Gehäuse (10) für mindestens einen Rotor aufweist, wobei das Dichtelement eine Wabenstruktur (1) zur Anordnung im Gehäuse (10) sowie flächige und / oder stabförmige Stützstrukturen (2) aufweist, wobei sich die Wände der Wabenstruktur (1) in einer ersten Richtung (A) erstrecken, wobei die Stützstrukturen (2) mit der Wabenstruktur (1) einstückig und / oder in wiederkehrenden Mustern verbunden sind und sich zumindest teilweise in die Wabenstruktur (1) erstrecken und die Stützstrukturen (2) sich mindestens teilweise in einer zweiten Richtung (B) erstrecken, die von der ersten Richtung (A) abweicht, wobei die Stützstrukturen (2) flächige Anteile aufweisen, die mindestens eine teilweise oder ganz geschlossene Zelle (3) mit der Wabenstruktur (1) ausbilden,
**dadurch gekennzeichnet,**
**dass** die Waben der Wabenstruktur (1) einen rautenförmigen Querschnitt aufweisen, wobei der spitze Winkel (α) der Rautenform senkrecht zur Drehebene (R) des Rotors (11) liegt.

2. Dichtelement nach Anspruch 1, **dadurch gekennzeichnet, dass** die Wabenstruktur (1) und / oder die Stützstrukturen (2) bei einem Kontakt mit dem mindestens einen Bauteil abrasiv veränderbar sind.

3. Dichtelement nach Anspruch 1 oder 2, **dadurch gekennzeichnet, dass** die erste Richtung (A), in der sich die Wabenstruktur (1) erstreckt im Wesentlichen senkrecht zum Gehäuse (10) liegt und/oder dass die Stützstrukturen (2) in der zweiten Richtung (B) angeordnet sind, die im Wesentlichen senkrecht zur ersten Richtung (A) der Wabenstruktur (1) liegt.

4. Dichtelement nach mindestens einem der vorhergehenden Ansprüche, **dadurch gekennzeichnet, dass** die mindestens eine geschlossene Zelle (3) eine fluiddichte Zelle ist und / oder dass die mindestens eine geschlossene Zelle (3) mindestens teilweise mit einem Löschmittel und / oder Luft befüllt ist.

5. Dichtelement nach mindestens einem der vorhergehenden Ansprüche, **dadurch gekennzeichnet, dass** der spitze Winkel (α) weniger als 60°, insbesondere zwischen 60° und 30°, aufweist.

6. Dichtelement nach mindestens einem der vorhergehenden Ansprüche, **dadurch gekennzeichnet, dass** die Stützstrukturen (2) in der ersten Richtung (A) jeweils versetzt an den Waben der Wabenstruktur (1) angeordnet sind.

7. Dichtelement nach mindestens einem der vorhergehenden Ansprüche, **dadurch gekennzeichnet, dass** die Wabenstruktur (1) und / oder die Stützstrukturen (2) eine Dicke, insbesondere eine Wanddicke von weniger als 100 µm, insbesondere weniger als 80 µm, aufweisen.

8. Dichtelement nach mindestens einem der vorhergehenden Ansprüche, **dadurch gekennzeichnet, dass** die Wabenstruktur (1) und / oder die Stützstrukturen (2) aus einem metallischen Material bestehen, insbesondere aus der FeCrAlxx Gruppe oder Ni-Basis Legierungsgruppe, wobei Wabenstruktur (1) und Stützstrukturen (2) insbesondere aus demselben Material aufgebaut sind.

9. Dichtelement nach mindestens einem der vorhergehenden Ansprüche, **dadurch gekennzeichnet, dass** die Wabenstruktur (1) und / oder Stützstrukturen (2) im Dichtelement (15) eine variable Dichte, Struktur und / oder Form aufweist.

10. Dichtelement nach mindestens einem der vorhergehenden Ansprüche, **dadurch gekennzeichnet, dass** die Wabenstruktur (1) ein Mittel zur Rückhaltung von Lot aufweist, insbesondere durch Ausbildung von Kammern durch Stützstrukturen (2) in der Wabenstruktur und / oder dass die Wabenstruktur (1) mit einem fluidischen Ventilmittel zur Verbesserung der Dichtungseigenschaften gekoppelt ist.

11. Dichtelement nach mindestens einem der Ansprüche 1 bis 10, **dadurch gekennzeichnet, dass** die Wabenstruktur (1) und / oder die Stützstrukturen (2) durch einen metallischen 3D-Siebdruck oder einen metallischen 3D-Druckvorgang herstellbar sind.

12. Dichtelement nach Anspruch 11, **dadurch gekennzeichnet, dass** bei der Herstellung ein metallisches Pulver verwendet wird, insbesondere mit einer Korngröße D90 von weniger als 10 µm.

13. Turbomaschine, insbesondere Flugzeugtriebwerk, mit einem Dichtelement (15) nach mindestens einem der Ansprüche 1 bis 10 oder den Ansprüchen 11 oder 12.

14. Verfahren zur Herstellung eines Dichtelements für eine Turbomaschine, insbesondere ein Flugzeugtriebwerk, welche ein Gehäuse für mindestens einen Rotor aufweist,
**dadurch gekennzeichnet, dass**
eine Wabenstruktur (1) zur Anordnung im Gehäuse (10) und flächige und / oder stabförmige Stützstrukturen (2) mindestens teilweise durch einen metallischen 3D-Siebdruck oder einen metallischen 3D-Druckvorgang hergestellt wird, wobei sich die Wände der Wabenstruktur (1) in einer ersten Richtung (A) erstrecken und die Stützstrukturen (2) mit der Wabenstruktur (1) zumindest teilweise einstückig und / oder in wiederkehrenden Mustern verbunden sind, sich die Stützstrukturen (2) zumindest teilweise in die Wabenstruktur (1) erstrecken und die Stützstrukturen (2) sich mindestens teilweise in einer zweiten Richtung (B) erstrecken, die von der ersten Richtung (A) abweicht, wobei die Stützstrukturen (2) flächige Anteile aufweisen, die mindestens eine teilweise oder ganz geschlossene Zelle (3) mit der Wabenstruktur (1) ausbilden, wobei die Waben der Wabenstruktur (1) einen rautenförmigen Querschnitt aufweisen, wobei der spitze Winkel (α) der Rautenform senkrecht zur Drehebene (R) des Rotors (11) liegt und der spitze Winkel (α) weniger als 60° aufweist.

## Claims

1. Sealing element for a turbomachine, in particular an aircraft engine, which has a housing (10) for at least one rotor, wherein the sealing element has a honeycomb structure (1) for arrangement in the housing (10) and also planar and/or rod-shaped support structures (2), wherein the walls of the honeycomb structure (1) extend in a first direction (A), wherein the support structures (2) are connected to the honeycomb structure (1) in one piece and/or in recurring patterns and extend at least partially into the honeycomb structure (1) and the support structures (2) extend at least partially in a second direction (B) that is different from the first direction (A), wherein the support structures (2) have planar portions which, with the honeycomb structure (1), form at least one partially or completely closed cell (3),
**characterized in that**
the honeycombs of the honeycomb structure (1) have a rhombic cross section, wherein the acute angle (α) of the rhombus is perpendicular to the plane of rotation (R) of the rotor (11).

2. Sealing element according to Claim 1, **characterized in that** the honeycomb structure (1) and/or the support structures (2) are abrasively modifiable in the event of contact with the at least one component.

3. Sealing element according to Claim 1 or 2, **characterized in that** the first direction (A), in which the honeycomb structure (1) extends, is substantially perpendicular to the housing (10), and/or **in that** the support structures (2) are arranged in the second direction (B), which is substantially perpendicular to the first direction (A) of the honeycomb structure (1).

4. Sealing element according to at least one of the preceding claims, **characterized in that** the at least one closed cell (3) is a fluid-tight cell and/or **in that** the at least one closed cell (3) is filled at least partially with an extinguishing agent and/or air.

5. Sealing element according to at least one of the preceding claims, **characterized in that** the acute angle (α) is less than 60°, in particular between 60° and 30°.

6. Sealing element according to at least one of the preceding claims, **characterized in that** the support structures (2), in the first direction (A), are each arranged offset on the honeycombs of the honeycomb structure (1).

7. Sealing element according to at least one of the preceding claims, **characterized in that** the honeycomb structure (1) and/or the support structures (2) have a thickness, in particular a wall thickness, of less than 100 µm, in particular of less than 80 µm.

8. Sealing element according to at least one of the preceding claims, **characterized in that** the honeycomb structure (1) and/or the support structures (2) are made of a metallic material, in particular from the FeCrAlxx group or the Ni-based group of alloys, wherein honeycomb structure (1) and support structures (2) are in particular constructed from the same material.

9. Sealing element according to at least one of the preceding claims, **characterized in that** the honeycomb structure (1) and/or the support structures (2) have a variable density, structure and/or shape in the sealing element (15).

10. Sealing element according to at least one of the preceding claims, **characterized in that** the honeycomb structure (1) has a means for retaining solder, in particular through formation of chambers by support structures (2) in the honeycomb structure, and/or **in that** the honeycomb structure (1) is coupled to a fluidic valve means for improving the sealing properties.

11. Sealing element according to at least one of Claims 1 to 10, **characterized in that** the honeycomb structure (1) and/or the support structures (2) can be produced by a metallic 3D screen print or a metallic 3D printing process.

12. Sealing element according to Claim 11, **characterized in that** a metallic powder, in particular with a particle size D90 of less than 10 µm, is used in the production.

13. Turbomachine, in particular an aircraft engine, having a sealing element (15) according to at least one of Claims 1 to 10 or Claims 11 or 12.

14. Method for producing a sealing element for a turbomachine, in particular an aircraft engine, which has a housing for at least one rotor,
**characterized in that**
a honeycomb structure (1) for arrangement in the housing (10) and planar and/or rod-shaped support structures (2) are produced at least in part by a metallic 3D screen print or a metallic 3D printing process, wherein the walls of the honeycomb structure (1) extend in a first direction (A) and the support structures (2) are at least partially connected to the honeycomb structure (1) in one piece and/or in recurring patterns, the support structures (2) extend at least partially into the honeycomb structure (1), and the support structures (2) extend at least partially in a second direction (B) that is different from the first direction (A), wherein the support structures (2) have planar portions which, with the honeycomb structure (1), form at least one partially or completely closed cell (3), wherein the honeycombs of the honeycomb structure (1) have a rhombic cross section, wherein the acute angle (α) of the rhombus is perpendicular to the plane of rotation (R) of the rotor (11), and the acute angle (α) is less than 60°.

## Revendications

1. Élément d'étanchéité pour une turbomachine, notamment un moteur d'aéronef, qui présente un carter (10) pour au moins un rotor, l'élément d'étanchéité présentant une structure en nid d'abeilles (1) destinée à être agencée dans le carter (10) ainsi que des structures de support (2) planes et/ou en forme de barres, les parois de la structure en nid d'abeilles (1) s'étendant dans une première direction (A), les structures de support (2) étant reliées à la structure en nid d'abeilles (1) d'un seul tenant et/ou selon des motifs répétitifs et s'étendant au moins partiellement dans la structure en nid d'abeilles (1) et les structures de support (2) s'étendant au moins partiellement dans une deuxième direction (B) qui diffère de la première direction (A), les structures de support (2) présentant des parties planes qui forment au moins une cellule (3) partiellement ou entièrement fermée avec la structure en nid d'abeilles (1),
**caractérisé en ce que**
les alvéoles de la structure en nid d'abeilles (1) présentent une section transversale en forme de losange, l'angle aigu (α) de la forme de losange étant perpendiculaire au plan de rotation (R) du rotor (11).

2. Élément d'étanchéité selon la revendication 1, **caractérisé en ce que** la structure en nid d'abeilles (1) et/ou les structures de support (2) peuvent être modifiées par abrasion lors d'un contact avec l'au moins un composant.

3. Élément d'étanchéité selon la revendication 1 ou 2, **caractérisé en ce que** la première direction (A) dans laquelle s'étend la structure en nid d'abeilles (1) est sensiblement perpendiculaire au carter (10) et/ou **en ce que** les structures de support (2) sont agencées dans la deuxième direction (B) qui est sensiblement perpendiculaire à la première direction (A) de la structure en nid d'abeilles (1).

4. Élément d'étanchéité selon au moins l'une quelconque des revendications précédentes, **caractérisé en ce que** l'au moins une cellule fermée (3) est une cellule étanche aux fluides et/ou **en ce que** l'au moins une cellule fermée (3) est au moins partiellement remplie d'un agent extincteur et/ou d'air.

5. Élément d'étanchéité selon au moins l'une quelconque des revendications précédentes, **caractérisé en ce que** l'angle aigu (α) est inférieur à 60°, notamment compris entre 60° et 30°.

6. Élément d'étanchéité selon au moins l'une quelconque des revendications précédentes, **caractérisé en ce que** les structures de support (2) sont respectivement agencées en décalage dans la première direction (A) sur les alvéoles de la structure en nid d'abeilles (1).

7. Élément d'étanchéité selon au moins l'une quelconque des revendications précédentes, **caractérisé en ce que** la structure en nid d'abeille (1) et/ou les structures de support (2) présentent une épaisseur, notamment une épaisseur de paroi inférieure à 100 um, notamment inférieure à 80 µm.

8. Élément d'étanchéité selon au moins l'une quelconque des revendications précédentes, **caractérisé en ce que** la structure en nid d'abeille (1) et/ou les structures de support (2) sont constituées d'un matériau métallique, notamment du groupe FeCrAlxx ou du groupe des alliages à base de Ni, la structure en nid d'abeille (1) et les structures de support (2) étant notamment construites dans le même matériau.

9. Élément d'étanchéité selon au moins l'une quelconque des revendications précédentes, **caractérisé en ce que** la structure en nid d'abeille (1) et/ou les structures de support (2) dans l'élément d'étanchéité (15) présentent une densité, une structure et/ou une forme variable.

10. Élément d'étanchéité selon au moins l'une quelconque des revendications précédentes, **caractérisé en ce que** la structure en nid d'abeille (1) présente un moyen de rétention de métal d'apport de brasage, notamment par formation de chambres par des structures de support (2) dans la structure en nid d'abeille, et/ou **en ce que** la structure en nid d'abeille (1) est couplée à un moyen de soupape fluidique pour améliorer les propriétés d'étanchéité.

11. Élément d'étanchéité selon au moins l'une quelconque des revendications 1 à 10, **caractérisé en ce que** la structure alvéolaire (1) et/ou les structures de support (2) peuvent être fabriquées par une sérigraphie 3D métallique ou une opération d'impression 3D métallique.

12. Élément d'étanchéité selon la revendication 11, **caractérisé en ce qu'**une poudre métallique est utilisée lors de la fabrication, notamment avec une taille de grain D90 inférieure à 10 µm.

13. Turbomachine, notamment moteur d'aéronef, avec un élément d'étanchéité (15) selon au moins l'une quelconque des revendications 1 à 10 ou les revendications 11 ou 12.

14. Procédé de fabrication d'un élément d'étanchéité pour une turbomachine, notamment un moteur d'aéronef, qui présente un carter pour au moins un rotor,
**caractérisé en ce que**
une structure en nid d'abeille (1) destinée à être agencée dans le carter (10) et des structures de support (2) planes et/ou en forme de barres sont fabriquées au moins partiellement par une sérigraphie 3D métallique ou une opération d'impression 3D métallique, les parois de la structure en nid d'abeille (1) s'étendant dans une première direction (A) et les structures de support (2) étant reliées à la structure en nid d'abeille (1) au moins partiellement d'un seul tenant et/ou selon des motifs répétitifs, les structures de support (2) s'étendent au moins partiellement dans la structure en nid d'abeille (1) et les structures de support (2) s'étendent au moins partiellement dans une deuxième direction (B) qui diffère de la première direction (A), les structures de support (2) présentant des parties planes, qui forment au moins une cellule (3) partiellement ou totalement fermée avec la structure en nid d'abeille (1), les alvéoles de la structure en nid d'abeille (1) présentant une section transversale en forme de losange, l'angle aigu (α) de la forme de losange étant perpendiculaire au plan de rotation (R) du rotor (11) et l'angle aigu (α) étant inférieur à 60°.
